# EUROPEAN PATENT SPECIFICATION

(11) **EP 2 277 371 B1**
(45) Date of publication and mention of the grant of the patent: **12.10.2016**
(21) Application number: 10170168.8
(22) Date of filing: 20.07.2010
(51) Int. Cl.: A01G 15/00

(54) **Precipitation management method by desert soil**
Regensverwaltungverfahren durch Wüstenboden
Méthode de gestion des précipitations au moyen de sol du désert

(30) Priority: 20.07.2009 TR 200905605
(43) Date of publication of application: 26.01.2011
(73) Proprietor: Ekodenge Cevre Danismanlik Ve Muhendislik Hizmetleri Limited Sirketi, Ankara 06800 (TR)
(72) Inventor: Saydam, Cemal, 06800, Ankara (TR)
(74) Representative: Dericioglu Kurt, Ekin

(56) References cited:
- GB-A- 201 574
- US-A- 5 169 783
- SAYDAM A.C., SENYUVA H.Z.: "Deserts: Can they be the potential suppliers of bioavailable iron?" GEOPHYSICAL RESEARCH LETTERS, vol. 29, no. 11, 12 June 2002 (2002-06-12) , XP008128309 ISSN: 0094-8276

## Description

### Technical Scope

This invention is in regard to the interaction of desert soil with clouds and its use for precipitation control.

### Previous Technical

The scarceness of water on the planet is a big problem for many parts of the world. Besides other elements for water usage sustainability management, ways for controlling the primary source of water, clouds, is of great importance as well. One of the known applications in a technical aspect is the use of various artificial chemicals to increase the number and volume of cloud seeding for precipitation enhancement, this method has been put to trial and is still being used. Various artificial chemicals, polymers, bacteria and fungi are used aiming to create precipitation. Applications force a cloud to precipitate by aiming to increase the number and size of ice nuclei, which are hexagonal formations in the cloud known to cause precipitation.

Patent document US2005056705 in the United States mentions the usage of materials like sodium or calcium chloride and urea for cloud seeding for precipitation enhancement. Patent document with application number US5357865 in the United States is about cloud seeding with potassium chloride or potassium perchlorate.

Patent document US6315213 in the United States mentions that precipitation can be withheld because of seeding of clouds with cross-linked polymers, resulting in the absorption of water and falling in a gelatin like form.

Patent documents FR2808222 in France and US60556203 in the United States mention increasing the size of ice nuclei by including liquid carbon dioxide, liquid propane, liquid air and liquid nitrogen in the cloud and forcing of clouds to precipitation.

Patent document US5174498 in the United States mentions precipitation enhancement of clouds by seeding with long bonded aliphatic alcohols.

Patent documents US3774842 and US3774843 in the United States mention the formation atomized water droplets by the shock freezing of water droplets or the formation of ice nuclei by the adiabatic freezing of expanding air while spraying high pressured water.

Patent documents ZA7803207 and US3788543 mention of cloud seeding with different concentrations of chemicals including silver iodide and different systems of application in to the cloud.

Patent document US5169783 in the United States mentions the enhancement of precipitation by introducing lichens in to the clouds. This disclosure clearly states that "Organic and inorganic dust particles, including clay minerals, all of which only show freezing nucleation at temperatures below -8 °C, are not likely candidates as lichen-associated ice nuclei.... Thus eliminated bacterial and dust derived nuclei, one must conclude that the ice nucleation activity of lichens is the result of substrate produced by the lichens themselves. This substance could be a product of phycobiont, the mucobiont por a combination of two.... Alternatively, one or more of the secondary metabolites occurring as precipitates on the surface of lichen hyphea may be the source of the observed ice nuclei". This disclosure does not mention anything about oxalate crystal formation

Patent document US4200228 in the United States mentions the use of bacteria for cloud seeding. The document mentions that bacteria are important as cloud condensation nucleus.

Patent document GB201574 A (Luke Francis Warren) is about improvements in or relating to condensing, coalescing and precipitating atmospheric moisture basing on the artificial electrification of the atmosphere by spraying preferably upon the upper side of the cloud, fog, etc., finely divided particles having opposite electrical charge from that of cloud. Furthermore this disclosure talks about the advantage of dust capable of retaining electrical charge and accepts fine sand as a suitable material that is to be sprayed in or upon the cloud, fog or mist etc., desired to be precipitated.

Previously known technical applications involve the use of various chemical and physical techniques for the formation of ice nuclei within the cloud. However, applications involving lichens, fungus or bacteria as cloud condensation nucleus does not mention about any in cloud mechanisms or oxalate having hexagonal crystalline structure production by the bacteria and fungus.

Document "Deserts: Can they be the potential suppliers of bioavailable iron?", from Saydam & Senyuva, 2002, discloses the use of specific desert soils to seed the clouds. The impact of oxalate released by fungi in the desert soil is mentioned.

### Short description of the invention

The aim of this invention is to provide enforcement of clouds to precipitate that can otherwise impossible to precipitate. The object of the invention can be achieved by a precipitation management method by desert dust as defined in claim 1.

The other aim of this invention is to enforce clouds to precipitate by using natural means without utilizing any instruments or chemicals that can alter the physical properties of the clouds.

One other aim of the invention is to increase the number and the volume of the Cloud Condensation Nucleus (CCN) by dispersing the desert dust into the clouds at proper temperatures.

Another aim of the invention is to enhance micronutrient elements within the clouds through solar light assisted reactions and eventually enhance the vegetative growth at receiving bodies.

Another aim of this invention is to enforce the clouds to precipitate while traversing over the catchment regions of water reservoirs and increase snow deposition as desired hence enable sustainable management of water reservoirs.

### Detailed Explanations of the Invention

For achieving the aim of the invention, the precipitation management by using desert soil is shown by the following figures;
Figure 1. This figure illustrates the cloud condensation nucleus within ordinary clouds.
Figure 2. This figure illustrates the size of cloud condensation nucleus with Saharan dust (100 micron).

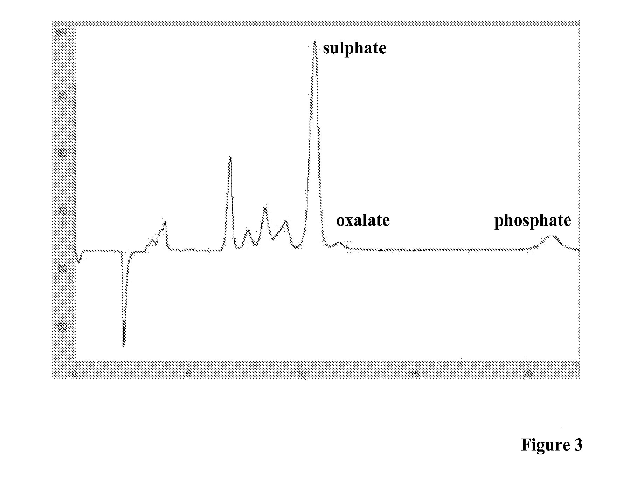

Figure 3. This ion chromatogram illustrates the cations and oxalate following the interactions of desert soil with water.
Figure 4. This snow height versus time figure illustrates the data of the fully automatic snow monitoring station at Kop Mountain-Turkey during 1999-2000.

This invention is about to interfere with the formation of cloud condensation nucleus by using natural substances and enforcing clouds to precipitate.
The principle of the invention is to disperse the desert dust into the clouds at appropriate temperature as to increase the number and the size of the cloud condensation nucleus. The invention subject on precipitation management by using desert dust necessitates dispersing of desert dust into the clouds as to sustain the contact of bacteria and fungus present within the desert dust with water droplets. Upon contact with water, bacteria or fungus releases oxalate having hexagonal crystalline structures as a result of cellular activities Oxalate crystals acts as a nucleus for the cloud condensation within the clouds. In precipitation management, cloud is seeded with fully natural desert soil. With this seeding both the number and the size of the cloud condensation nucleus increases.
The "desert soil" to be used in this invention taken from the ephemeral lakes evolved during the past Ice Ages at Northern Sahara. For example the soil samples gathered from East and West Libya, Southern Tunisia, South central Algeria, and Afghan /Iran border regions and eliminated from boulders without any further treatment. This soil samples is grinded and sieved to collect 200 micron or less sizes as dry. The selection of desert soil is crucial for the initiation of reaction mechanism within the clouds. Soil samples contain about 10⁷ bacteria per gram. But the desert origin bacterial fungal and mineralogical composition of the desert soil is also important. Not all desert soil is suitable for cloud seeding. Particularly, those ephemeral lakes evolved during Ice Ages especially at Northern Africa possessing mineralogical composition like hematite goethite and lepidocrosite. The investigations by samples obtained from those desert regions evolved from past geological marine environment cannot be used in cloud seeding activity.

One of the application procedures of the invention subject on precipitation management by using desert dust is that the desert soil is dispersed into the clouds as dry or wet provided that the solar radiation levels is above 250 Watt per square meter. Desert dust is grinded to 200 micron or less size and then dispersed into the clouds having a temperature range of minus seven(-7) to minus fifteen(-15) degrees Celsius.

In one of the other application procedures of the invention subject on precipitation management by using desert dust, during periods where the solar light energy is not enough or at night times, desert dust having 200 micron or less size is diluted and irradiated at least for two hours to sustain 200 Watt per square meter light requirement before dispersed into the clouds. Irradiation is preferably performed by using halogen lamps capable of having visible light spectrum. Irradiated desert dust-water solution can be dispersed or pulverized into the clouds at (-7/-15) degrees Celcius temperature range. Upon contact with water the bacterial and fungal content of desert dust matrix becomes active. In consequence of the reaction with bacteria and fungus, 1 mole oxalate that can be measured instrumentally releases. Oxalate released then attaches them to a clay mineral desert dust matrix, represented as ≡FeOH, as to perform the following reactions in sequence.

Bacteria and fungus + Cloud (water) → HC₂O₄⁻ (I)

≡FeOH + HC₂O₄⁻ → ≡FeC₂O₄ + H₂O (II)

If the ground level solar light energy is or above the 200 Watt per square meter level then the reaction mechanism proceeds as shown below.

≡Fe C₂O₄⁻ k(λ) → ≡Fe(II) + CO₂ + CO₂^{·} (III)

CO₂· + CO₂· → C₂O₄⁻ (IV)

The bacteria and fungus present within the Saharan desert can sustain themselves as thousands of years as dry. Atmospheric events may uplift the Saharan dust and may transport them far away from source regions and as they move away from their origin this increases the chance of contact with cloud, or water. Upon contact with cloud water the bacterial and fungal composition becomes active and releases oxalate as an osmosolute to their surroundings within fifteen minutes (I). This oxalate crystal not only acts as a cloud condensation nucleus but also attaches bacteria and fungus onto the surrounding clay minerals and diffuse into the crystalline structure as to form iron oxalate as shown in Reaction (II). The water molecule utilized by the bacteria and fungus as to become active supplied back to the medium as a result of Reaction(II). This process is essential for sustaining clouds. If the solar light energy at that latitude and longitude is or above 200 Watt per square meter level besides the primary oxalate formed, iron oxalate formed after minimum two hours of irradiation as a result of Reaction(2) undergoes a decraboxylation reaction and breakdowns and releases the end products as shown in Reaction(III). After two hours of irradiation (irradiation reaction symbolized as kλ at Reaction(II) the reduced iron level within the clouds reaches its maximum levels. Stochiometrically, iron at its reduced form is unstable and should be utilized immediately by the organisms. This form of iron is used by the bacteria and fungus present within the clouds bearing desert dust matrix as to sustain their biological lives. Reaction (III) also results with the formation of unstable carbonyl radical. This radical formed may catalyzes the reduction of another iron present within the clay mineral and further enhances the medium with respect to reduce iron level. The iron present within the clay mineral and the carbonyl radical formed may react with another carbonyl radical as shown in Reaction(IV) may lead to the formation of another oxalate molecule. This is the reason why it's possible to measure high levels of oxalate molecules within the clouds than outside the clouds. Bacteria and fungus present in the media satisfies their iron requirements from this reaction and the other necessary important item nitrogen from atmosphere. As a result of these activities they sustain their biological activities and able to proliferate themselves. (Saydam & Senyuva, 2002) As a result of all these reactions cloud media with time are enhanced by the basic amino acids produced by primitive organisms. The natural proliferation of the bacteria and fungus present within the medium with time further enhances the oxalate crystals that acts as a cloud condensation nuclei's within the clouds.

By the utilization of desert origin dust in cloud seeding the bacteria and fungus becomes active as a result of reaction scheme. The water loss as a result of reaction is replenished and as the reaction scheme progress the carbon dioxide formed acts as a micron greenhouse effect. Thus the reaction mechanisms proposed allows sustainable environment for the actions of bacteria and fungus within the cloud media.

The quantity of the desert dust appears as a limiting factor if not used sufficiently during the cloud seeding operations. The reaction scheme will breakdown flowing Reaction (I), bacterial proliferation hence oxalate formation and eventually precipitation will terminate. Thus continuous supply of desert dust into the clouds sustains both the reaction mechanisms as well as precipitation.

The clay mineral structure collapses following the reduction of iron that is present at the crystalline structure of clay mineral. This process, assisted by the solar light energy enhances the medium by reduced iron by other elements (like zinc and manganese) associated with that medium also liberated. The formation iron is entirely dependent on the light intensity and its sustainability. Following the irradiation of desert soil and water mixture for two hours the reduced iron level reaches its peak levels and the medium is also enhanced by manganese and zinc during this time. After the termination of the irradiation after two hours decrease observed in the reduced iron level. This confirms that the reaction mechanism is light dependent. (Saydam & Senyuva, 2002)

The mineralogical composition of the desert soil is also important factor in this invention. The presence of lepidocrosite is essential since it has much more amorphous crystalline structure much easier to be decomposed by oxalate released by the bacteria and fungus as compared to hematite and goethite. If, Arabian Desert soil or soil from Anatolia used as a seeding material, under similar conditions, the formation of reduced iron can only be observed at Saharan desert soil. Other samples does not show any increase in reduced iron levels. (Saydam & Senyuva, 2002)

Saharan desert samples irradiated with Co⁶⁰ gamma rays hence sterilized from its bacterial and fungal contents by dry sterilization method. Following such sterilization it has been shown that, under similar conditions in cloud chamber Saharan desert soil has not yield any growth of cloud condensation nucleus. This proves that the cloud seeding mechanism is dependent on the oxalate crystals produced by the bacteria and fungus upon contact with water. Following sterilization it has also been shown that neither the expected oxalate nor the reduced iron production as a result of Reactions (I-II) have been realized. This further shows that desert dust soil matrix should be used as a whole for cloud seeding. In this invention following the pulverization of dust, the clouds with time enhances by chemicals that can be named as natural fertilizers and by some other trace elements present within the crystalline structure of the clay minerals following its collapse. (Saydam & Senyuva, 2002)

In this invention which is about precipitation management by desert dust, the hexagonal crystals of oxalate are produced by the bacterial and fungal composition of the desert soil matrix upon contact with water. The reaction scheme further results with the formation of carbonyl radicals through the decarboxylation reaction shown in Reaction(III) provided that the solar irradiation level is adequate. The carbonyl radicals formed may react with yet another carbonyl radical as to form the secondary oxalate crystals. Thus as a result these secondary oxalates that also act as a cloud condensation nuclei's, ice particles condenses as around these semi hydrophilic and semi hydrophobic nature oxalate crystals naturally. Further collision of ice particles with another ice particle within the cloud further increases the size of ice particles and enforces clouds to precipitate which then precipitate as snow or rain depending on the weather conditions.

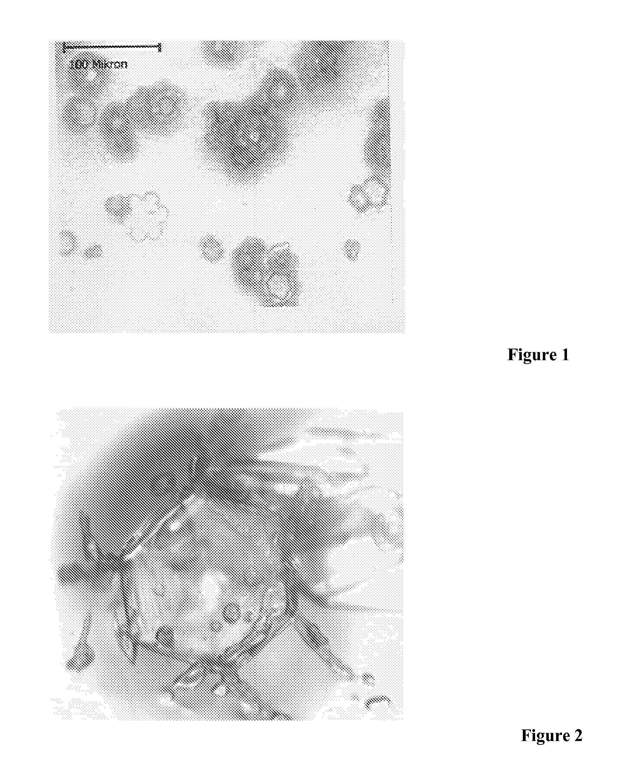

Following the injection of the Saharan desert soil the size of the cloud condensation nucleus, which are about 10-30 micron in size naturally Figure(I), increases to 200 and even up to 400 micron size (Figure 2). The increase in the size of the cloud condensation nucleus means that the clouds enforced to precipitate.
In this invention which is about precipitation management by desert dust stems from the fact that the snowflakes has an hexagonal centre thus similarly, cloud condensation nucleus should have an hexagonal crystalline structure . The sizes of natural ice crystals can be enlarged by dispersing chemicals having suitable crystalline structures into the clouds.

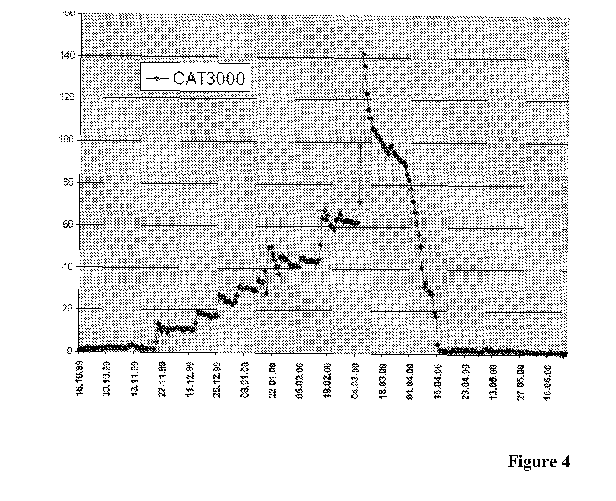

The end products mentioned at Reaction (III) can take place if the solar light energy is adequate and further proceeds if the reduced iron is utilized and atmospheric nitrogen is fixed. Such environment also favors the logarithmic proliferation of the bacteria and fungus within the clouds hence increase in the release of oxalates.
The results obtained from the fully automatic snow monitoring stations located at eastern Anatolia supports our argument since extraordinary snow accumulation measurements coincides with the time period where the solar light intensity is reaches a critical level at that latitude and longitude. As shown in Figure 4, while the observed snow accumulation from November-February can only reaches to 40-50 cm height following the time period where the solar light intensity is or above adequate level net increases in snow height are observed as shown in Figure (4).

Condensation of water molecules around the oxalate crystals is sufficient as to enforce clouds to precipitate under normal conditions, one other application of the invention where the solar light level is not sufficient, precipitation management still can be performed simply by irradiating the desert dust prior to pulverization into the clouds clouds to precipitate at a maximum possible rate.

Experiments performed in a cloud chamber has shown that in cloud pulverization of desert dust should be performed at temperature range of minus 7 to 15 degrees Celsius as to create the best conditions for cloud condensation nucleus. However, dispersion of dust into the clouds can also be performed at any temperature range, if desired.

During the course of cloud seeding pulverization process is entirely governed by the rate of precipitation demand of the receiving body. Thus for the process of pulverization planes of various capacities ranging from capable of carrying tones of dust down to aerial fire-fighting planes can easily be used for small scale applications. If desired remote control planes can also be used to disperse dust into the clouds for very small scale applications.
One other application means of the invention involves the use of helium filled balloons capable of dispersing dust into the clouds automatically at pre programmed temperatures.

## Claims

1. Precipitation management method by desert dust consisting of dispersing desert origin dust into the clouds, resulting in
- the contact of bacteria and fungus present in the desert dust with water,
- the formation of oxalate having hexagonal crystalline structure by the bacteria and fungus as an osmosolute,
- the action of an hexagonal crystal as an cloud condensation nucleus,
- triggering of snow formation within the clouds by oxalate crystals. **characterized in that** said desert dust is desert origin soil evolved at the ephemeral lake basins, evolved during glacial time periods, separated from its boulders but not any other pre treatment.

2. Precipitation management method by desert dust according to claim 1 wherein said desert dust is **characterized by** desert soil having maximum 200 micron size fraction by dry sieving and grinding.

3. Precipitation management method by desert dust according to claim 2 wherein said desert dust is **characterized by** its hematite- goethite and lepidocrosite mineral compositions.

4. Precipitation management method by desert dust according to claim 3 wherein said desert dust is **characterized by** dispersing into the clouds as wet or dry if the solar light energy is adequate.

5. Precipitation management method by desert dust according to claim 3 wherein said desert dust is characterized to be liquidified before dispersed into the cloud if the solar light energy is not adequate.

6. Precipitation management method by desert dust according to claim 5 wherein said desert dust is characterized to be irradiated at least for two hours by light sources as to achieve 200 watt light energy level.

7. Precipitation management method by desert dust according to claim 6 wherein said desert dust is **characterized by** pulverization or dispersion of irradiated desert dust water mixture into the clouds.

8. Precipitation management method by desert dust according to claim 4 and 6 wherein said desert dust is introduced into the clouds at temperatures of -7 to - 15°C.

9. Precipitation management method by desert dust according to claim 8 wherein said desert dust is **characterized by** in cloud reaction schemes (I,II,III,VI), Bacteria and
Fungus + Cloud (H₂O) → HC₂O₄⁻ (I)
≡FeOH + HC₂O₄- → ≡Fe C₂O₄⁻ + H₂O (II)
≡Fe C₂O₄⁻ k(λ) → ≡Fe(II) + CO₂ + CO₂· (III)
CO₂· + CO₂· → C₂O₄⁻ (IV)
≡FeOH representing the clay mineral.

10. Precipitation management method by desert dust according to claim 9 wherein said desert dust is characterized to replenish the water loss at Reaction (I), by the Reaction(II)

11. Precipitation management method by desert dust according to claim 9 wherein said desert dust is **characterized by** the carbonyl radical that acts to reduce the clay mineral.

12. Precipitation management method by desert dust according to claim 11 wherein said desert dust is characterized to form another oxalate molecule through the combination of carbonyl radicals as Reaction (VI).

13. Precipitation management method by desert dust according to claim 12 wherein said desert dust is **characterized by** enhancement of clouds with basic amino acids with time through the bacteriological activities within the clouds.

14. Precipitation management method by desert dust according to claim 12 wherein said desert dust is **characterized by** the reaction scheme where carbon dioxide acts to create micro greenhouse effect.

15. Precipitation management method by desert dust according to claim 8 wherein said desert dust is **characterized by** the desert origin dust of claim 14 wherein said dispersion is continued as to sustain the reaction schemes and precipitation.

16. Precipitation management method by desert dust according to claim 15 wherein said desert dust is **characterized by** easily decomposable lepidocrosite when react with oxalate.

17. Precipitation management method by desert dust according to claim 16 wherein said desert dust is **characterized by** the sustainment of the reaction schemes at ground by irradiation if the solar light energy is not adequate.

18. Precipitation management method by desert dust according to claim 17 wherein said desert dust is **characterized by** the transport and dispersed into the clouds via planes of various sizes ranging from big planes down to agricultural planes for large and small applications.

19. Precipitation management method by desert dust according to claim 17 wherein said desert dust is **characterized by** the transport and dispersed into the clouds by remotely controlled planes capable of carrying loads if the application area is small enough.

20. Precipitation management method by desert dust according to claim 17 wherein said desert dust is **characterized by** the transport and dispersed into the clouds by pre programmed helium filled balloons as to disperse the said desert dust at appropriate temperatures.

## Patentansprüche

1. Regensverwaltungverfahren durch Wüstenstaub bestehend aus Dispergieren des aus der Wüste stammenden Staubs in die Staubwolke, woraus folgendes resultiert,
- Kontakt der Bakterien und Pilze, die im Wüstenstaub vorhanden sind, mit Wasser,
- Bildung von Oxalate, die durch Bakterien und Pilze hexagonale kristallinische Struktur als Osmosolute aufweisen,
- Aktion eines hexagonalen Kristalls als ein Kondensationskeim,
- Auslösen der Schneebildung durch Oxalat-Kristalle innerhalb der Wolken , **dadurch gekennzeichnet, dass** der erwähnte Wüstenstaub aus der Wüste stammender Wüstenboden ist, der sich am Boden von ephemeren Seen und während der Eiszeit entwickelt und sich von seinen Felsblöcken aber ohne irgendeine Vorbehandlung getrennt hat.

2. Regensverwaltungverfahren durch Wüstenstaub gemäß Anspruch 1, wobei der erwähnte Wüstenstaub durch Wüstenboden mit einer Fraktion von maximal 200 Mikrometer-Größe durch Trockensieben und Vermahlen gekennzeichnet ist.

3. Regensverwaltungverfahren durch Wüstenstaub gemäß Anspruch 2, wobei der erwähnte Wüstenstaub durch seinen Hämatit-, Goethit und Lepidokrokit-Mineralzusammensetzungen gekennzeichnet ist.

4. Regensverwaltungverfahren durch Wüstenstaub gemäß Anspruch 3, wobei der erwähnte Wüstenstaub durch Dispergieren in den Wolken als naß oder trocken gekennzeichnet ist, wenn die Sonnenlicht-Energie ausreichend ist,

5. Regensverwaltungverfahren durch Wüstenstaub gemäß Anspruch 3, **dadurch gekennzeichnet, dass** der erwähnte Wüstenstaub in flüssige Form gebracht wird, bevor er in den Wolken dispergiert ist, wenn die Sonnenlicht-Energie geeignet ist

6. Regensverwaltungverfahren durch Wüstenstaub gemäß Anspruch 5, **dadurch gekennzeichnet, dass** der erwähnte Wüstenstaub zumindest für zwei Stunden durch Lichtquellen bestrahlt wird, um eine Lichtenergie-Höhe von 200 Watt zu erzielen.

7. Regensverwaltungverfahren durch Wüstenstaub gemäß Anspruch 6, wobei der erwähnte Wüstenstaub durch Pulverisierung oder Dispersion der ausgestrahlten Wüstenstaub-Wasser-Mischung in den Wolken gekennzeichnet ist.

8. Regensverwaltungverfahren durch Wüstenstaub gemäß Anspruch 4 und 6, wobei der erwähnte Wüstenstaub bei Temperaturen von -7 bis -15°C in die Wolken zugeführt ist.

9. Regensverwaltungverfahren durch Wüstenstaub gemäß Anspruch 8, wobei der erwähnte Wüstenstaub durch die Reaktion-Schemas (I, II, III, VI) in den Wolken gekennzeichnet ist,
Bakterien und Pilze+ Wolke (H₂O) → HC₂O₄ (I)
≡FeOH + HC₂O₄⁻ → ≡FeC₂O₄⁻ + H₂O (II)
≡Fe C₂O₄⁻ k(λ) → ≡Fe(II) + CO₂ + CO₂· (III)
CO₂· + CO₂· → C₂O₄⁻ (IV)

10. Regensverwaltungverfahren durch Wüstenstaub gemäß Anspruch 9, wobei der erwähnte Wüstenstaub **dadurch gekennzeichnet ist, dass** er den Wasserverlust bei der Reaktion (I) durch Reaktion (II) zu ergänzen hat.

11. Regensverwaltungverfahren durch Wüstenstaub gemäß Anspruch 9, wobei der erwähnte Wüstenstaub durch das Karbonyl-Radikal, das zur Reduzierung des Tonminerals wirkt, gekennzeichnet ist,

12. Regensverwaltungverfahren durch Wüstenstaub gemäß Anspruch 11, wobei der erwähnte Wüstenstaub **dadurch gekennzeichnet ist, dass** er durch Kombination von Karbonyl-Radikalen wie in Reaktion (VI) ein anderes Oxalat-Molekül bildet.

13. Regensverwaltungverfahren durch Wüstenstaub gemäß Anspruch 12, wobei der erwähnte Wüstenstaub durch Anreicherung der Wolken mit alkalischen Aminosäuren in der Laufzeit von bakteriologischen Aktivitäten innerhalb der Wolken gekennzeichnet ist.

14. Regensverwaltungverfahren durch Wüstenstaub gemäß Anspruch 12, wobei der erwähnte Wüstenstaub durch die Reaktionschema gekennzeichnet ist, in dem das Kohlendioxyd zur Herstellung des Mikro-Treibhauseffekts wirkt.

15. Regensverwaltungverfahren durch Wüstenstaub gemäß Anspruch 8, wobei der erwähnte Wüstenstaub durch den aus der Wüste stammenden Staub des Anpsruchs 14 gekennzeichnet ist, wobei die erwähnte Dispersion fortgesetzt wird, um die Reaktionskette und Niederschlag aufrechtzuerhalten.

16. Regensverwaltungverfahren durch Wüstenstaub gemäß Anspruch 15, wobei der erwähnte Wüstenstaub durch leicht zersetzlichen Lepidokrokit gekennzeichnet ist, wenn er mit Oxalat in eine Reaktion eingeht.

17. Regensverwaltungverfahren durch Wüstenstaub gemäß Anspruch 16, wobei der erwähnte Wüstenstaub durch Erhaltung der Reaktionsketten durch Bestrahlen auf dem Boden gekennzeichnet ist, wenn die Sonnenlicht-Energie nicht ausreichend ist,

18. Regensverwaltungverfahren durch Wüstenstaub gemäß Anspruch 17, wobei der erwähnte Wüstenstaub durch den Transport und Dispersion in den Wolken mittels Flugzeuge verschiedener Größe, die für umfangreiche und geringfügige Anwendungen sich von den grossen Flugzeugen bis auf die landwirtschaftlichen Flugzeugen erstrecken, gekennzeichnet ist.

19. Regensverwaltungverfahren durch Wüstenstaub gemäß Anspruch 17, wobei der erwähnte Wüstenstaub durch den Transport und Dispersion in den Wolken mittels fernbedienter Flugzeuge gekennzeichnet ist, die imstande sind Ladegut zu tragen, wenn der Anwendungsbereich klein genug ist.

20. Regensverwaltungverfahren durch Wüstenstaub gemäß Anspruch 17, wobei der erwähnte Wüstenstaub durch den Transport und Dispersion in den Wolken mittels vorprogrammierter, mit Helium gefüllter Ballons gekennziechnet ist, um den erwähnten Wüstenstaub bei entsprechenden Temperaturen zu dispergieren.

## Revendications

1. Méthode de gestion de la précipitation par poussière de désert consistant en la dispersion de la poussière de l'origine désertique dans les nouages, résultant en
- le contact de la bactérie et du champignon présents dans la poussière de désert avec de l'eau,
- la formation de l'oxalate possédant une structure cristalline hexagonale par la bactérie et le champignon comme osmosolute,
- l'action d'un cristal hexagonal comme un nucleus de condensation de nuage, - le déclenchement de la formation de la neige dans les nouages par les cristaux d'oxalate,
**caractérisée en ce que** ladite poussière de désert est le sol d'origine désertique évolué sur les bassins lacustres éphémères, évolué pendant les périodes d'époques glaciaires, et séparé de ses blocs mais non un autre prétraitement quelconque.

2. Méthode de gestion de la précipitation par la poussière de désert selon la revendication 1, dans laquelle ladite poussière de désert est **caractérisée par** le sol désertique d'une granulométrie de 200 microns au maximum par tamisage sec et broyage.

3. Méthode de gestion de la précipitation par la poussière de désert selon la revendication 2, dans laquelle ladite poussière de désert est **caractérisée par** ses compositions minérales hématites-goethites et lépidocrosites.

4. Méthode de gestion de la précipitation par la poussière de désert selon la revendication 3, dans laquelle ladite poussière de désert est **caractérisée par** la dispersion dans les nuages comme mouillé ou sec si l'énergie de lumière solaire est suffisante.

5. Méthode de gestion de la précipitation par la poussière de désert selon la revendication 3, dans laquelle ladite poussière de désert est **caractérisée par le fait qu'**elle serait liquéfiée avant d'être dispersée dans le nuage si l'énergie de lumière solaire n'est pas suffisante.

6. Méthode de gestion de la précipitation par la poussière de désert selon la revendication 5, dans laquelle ladite poussière de désert est **caractérisée par le fait qu'**elle serait irradiée pendant au moins deux heures par les sources de lumière afin d'atteindre un niveau énergétique de lumière de 200 watts.

7. Méthode de gestion de la précipitation par la poussière de désert selon la revendication 6, dans laquelle ladite poussière de désert est **caractérisée par** la pulvérisation ou la dispersion de la mixture de la poussière de désert et de l'eau dans les nuages.

8. Méthode de gestion de la précipitation par la poussière de désert selon les revendications 4 et 6, dans laquelle ladite poussière de désert est introduite dans les nuages aux températures de -7 à 15°C.

9. Méthode de gestion de la précipitation par la poussière de désert selon la revendication 8, dans laquelle ladite poussière de désert est **caractérisée par** les schémas de réaction dans le nuage (I, II, m, VI). La Bactérie et Le Champignon + Le Nuage
(H₂O) → HC₂O₄⁻ (I)
≡FeOH + HC₂O₄⁻ → ≡Fe C₂O₄⁻ + H₂O (II)
≡Fe C₂O₄⁻ k(λ) → ≡Fe(II) + CO₂ + CO₂· (III)
CO₂· + CO₂· → C₂O₄⁻ (IV)
≡FeOH représentant le minéral argileux.

10. Méthode de gestion de la précipitation par la poussière de désert selon la revendication 9, dans laquelle ladite poussière de désert est **caractérisée par** la reconstitution de la perte d'eau à la Réaction (I), par la Réaction (II).

11. Méthode de gestion de la précipitation par la poussière de désert selon la revendication 9, dans laquelle ladite poussière de désert est **caractérisée par** le radical carbonyle agissant pour réduire le minéral argileux.

12. Méthode de gestion de la précipitation par la poussière de désert selon la revendication 11, dans laquelle ladite poussière de désert est **caractérisée par** la formation d'une autre molécule d'oxalate à travers la combinaison des radicaux carbonyles comme Réaction (VI).

13. Méthode de gestion de la précipitation par la poussière de désert selon la revendication 12, dans laquelle ladite poussière de désert est **caractérisée par** le renforcement des nuages avec les acides aminés basiques avec le temps à travers les activités bactériologiques dans les nuages.

14. Méthode de gestion de la précipitation par la poussière de désert selon la revendication 12, dans laquelle ladite poussière de désert est **caractérisée par** le schéma de réaction où le dioxyde de carbone agit pour créer l'effet de la micro serre.

15. Méthode de gestion de la précipitation par la poussière de désert selon la revendication 8, dans laquelle ladite poussière de désert est **caractérisée par** la poussière de désert de la revendication 14 où ladite dispersion est continuée afin de maintenir les schémas de réaction et la précipitation.

16. Méthode de gestion de la précipitation par la poussière de désert selon la revendication 15, dans laquelle ladite poussière de désert est **caractérisée par** le lépidocrosite lorsqu'elle réagit avec l'oxalate.

17. Méthode de gestion de la précipitation par la poussière de désert selon la revendication 16, dans laquelle ladite poussière de désert est **caractérisée par** le maintien des schémas de réaction au sol par l'irradiation si l'énergie de lumière solaire n'est pas suffisante.

18. Méthode de gestion de la précipitation par la poussière de désert selon la revendication 17, dans laquelle ladite poussière de désert est **caractérisée par** le transport et la dispersion dans les nuages par les avions de divers dimensions allant des grandes avions aux avions agricoles pour les larges et petites applications.

19. Méthode de gestion de la précipitation par la poussière de désert selon la revendication 17, dans laquelle ladite poussière de désert est **caractérisée par** le transport et la dispersion dans les nuages par les avions contrôlés à distance capables de porter des poids si la zone d'application est suffisamment petite.

20. Méthode de gestion de la précipitation par la poussière de désert selon la revendication 17, dans laquelle ladite poussière de désert est **caractérisée par** le transport et la dispersion dans les nuages par les aérostats préprogrammés remplis d'hélium afin de disperser ladite poussière de désert aux températures appropriées.
